# EUROPEAN PATENT APPLICATION

(11) **EP 4 629 396 A1**
(43) Date of publication of application: **08.10.2025**
(21) Application number: 25163188.3
(22) Date of filing: 12.03.2025
(51) Int. Cl.: H01M 10/42, H01M 50/516

(54) **MASTER JIG DEVICE FOR SECONDARY BATTERY FOREIGN MATTER INSPECTION DEVICE**

(30) Priority: 03.04.2024 KR 20240045189
(71) Applicant: SAMSUNG SDI CO., LTD., Yongin-si, Gyeonggi-do 17084 (KR)
(72) Inventor: KIM, SEONG HYEOK, Yongin-si, Gyeonggi-do 17084 (KR); NOH, JUNG YEOL, Yongin-si, Gyeonggi-do 17084 (KR); OH, JUNG HUN, Yongin-si, Gyeonggi-do 17084 (KR); KANG, SEON YOUNG, Yongin-si, Gyeonggi-do 17084 (KR); AN, EUN HYE, Yongin-si, Gyeonggi-do 17084 (KR); LEE, HAK SU, Yongin-si, Gyeonggi-do 17084 (KR)
(74) Representative: Gulde & Partner

(57) **Abstract**

A master jig device for a secondary battery foreign matter inspection device configured to inspect whether a foreign matter inspection device is operating normally. The master jig device includes a jig body having a shape corresponding to a secondary battery; a magnetic force supply part on at least one of one side or another side in the longitudinal direction of the jig body and configured to generate a magnetic force; a current collection part outside the magnetic power supply part; and a to-be-inspected member fixed to the outside of the current collection part by the magnetic force of the magnetic force supply part and that is configured to be measured as foreign matter by a foreign matter inspection device.

## Description

### BACKGROUND

### 1. Field

The present disclosure relates to a master jig device for a secondary battery foreign matter inspection device.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly including a positive electrode and a negative electrode, a case accommodating the electrode assembly, and electrode terminals connected to the electrode assembly.

A current collection part electrically connected to the electrode assembly is provided on both sides of a secondary battery in the width direction, and foreign matter (spatter) may flow into the outside of the current collection part. Therefore, a foreign matter inspection device is used to measure the inflow of foreign matter. In addition, a master jig device may be used to check whether the foreign matter inspection device is operating normally.

The above information disclosed in this Background section is only for enhancement of understanding of the background of the invention and therefore it may contain information that does not constitute prior art.

### SUMMARY

The present disclosure relates to various embodiments of a master jig device for a secondary battery foreign matter inspection device that is configured to inspect whether a foreign matter inspection device is operating normally.

However, the technical problems to be achieved in the embodiment of the disclosure are not limited to the technical problems mentioned above, and other technical problems not mentioned herein will be clearly understood from the following description by those skilled in the art to which the disclosure belongs.

A master jig device for a secondary battery foreign matter inspection device according to an embodiment of the present disclosure includes: a jig body having a shape corresponding to a secondary battery; a magnetic force supply part on at least one of one side or another side in the longitudinal direction of the jig body and configured to generate a magnetic force; a current collection part outside the magnetic power supply part; and a to-be-inspected member fixed to the outside of the current collection part by the magnetic force of the magnetic force supply part and configured to be measured as foreign matter by a foreign matter inspection device.

In some embodiments, the jig body may have a rectangular parallelepiped shape and may have a first side located at one end in the longitudinal direction and a second side located at the other end in the longitudinal direction, and the magnetic force supply part may be fixed to the first side or the second side.

In some embodiments, the magnetic force supply part may include: a fixed body between the jig body and the current collection part and fixed to the outside of the jig body; and a fixed magnet inside the fixed body to generate the magnetic force.

In some embodiments, the fixed body may include a mounting hole part in which the fixed magnet is mounted and facing the current collection part.

In some embodiments, the mounting hole part may include: a first mounting hole extending in a direction toward the current collection part; and a second mounting hole connected to the first mounting hole and having an inner diameter equal to or larger than an outer diameter of the fixed magnet.

In some embodiments, the inner diameter of the second mounting hole may be larger than the inner diameter of the first mounting hole.

In some embodiments, the mounting hole part may include two or more mounting hole parts, the fixed magnet may include two or more fixed magnets, and the to-be-inspected member may include two or more to-be-inspected members.

In some embodiments, the fixed body may further include a support protrusion that protrudes in a direction toward the current collection part and engages the current collection part.

A master jig device for a secondary battery foreign matter inspection device according to an embodiment of the present disclosure may include: a jig body having a shape corresponding to a secondary battery; a magnetic force supply part on at least one of one side or another side in the longitudinal direction of the jig body and configured to generate a magnetic force; a current collection part outside the magnetic power supply part; a guide part outside the current collection part and including a hole extending in a direction toward the current collection part; and a to-be-inspected member configured to move to the outside of the current collection part through the guide part and to be fixed to the outside of the current collection part by the magnetic force of the magnetic force supply part.

In some embodiments, the guide part includes: a guide body facing the outer surface of the current collection part and fixed to the magnetic force supply part; and a guide hole facing the mounting hole part in the magnetic force supply part and through which the to-be-inspected member is configured to move.

In some embodiments, the master jig device may further include a fixing clamp fixed to the jig body and constraining the movement of the current collection part by pressing the current collection part in a direction toward the magnetic force supply part.

In some embodiments, the fixing clamp may include: a fixed body fixed to the jig body; and a fixing hook that extends from the fixed body and engages the outside of the current collection part.

In some embodiments, the fixing clamp includes two or more fixing clamps on both sides in the width direction of the current collection part.

In some embodiments, the fixing clamp may include: a fixed body fixed to the jig body; and a fixing hook that extends from the fixed body and engages the outside of the current collection part.

In some embodiments, the fixing clamp may include two or more fixing clamps on both sides in the width direction of the current collection part.

According to the present disclosure, since a to-be-inspected member having a foreign body shape is installed at a set position, provided is a master jig device for a secondary battery foreign matter inspection device, which quickly and accurately inspects whether the foreign matter inspection device for measuring whether foreign matter has entered the inside of the secondary battery is operating normally.

However, the technical effects to be achieved in the embodiment of the disclosure are not limited to the technical problems mentioned above, and other technical effects not mentioned herein will be clearly understood from the following description by those skilled in the art to which the disclosure belongs.

### BRIEF DESCRIPTION OF DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIGS. 1A and 1B are a perspective view and a cross-sectional view respectively, of an exemplary battery cell.
FIG. 2 is a perspective view showing a master jig device for a secondary battery foreign matter inspection device according to an embodiment of the present disclosure.
FIG. 3 is an exploded perspective view of the master jig device for a secondary battery foreign matter inspection device according to an embodiment of the present disclosure.
FIG. 4 is a perspective view showing a state in which a current collection part and a guide part are spaced apart from each other, according to an embodiment of the present disclosure.
FIG. 5 is a perspective view showing the guide part fixed to the outside of the current collection part, according to an embodiment of the present disclosure.
FIG. 6 is a perspective view showing a state in which the guide part is separated from the current collection part when a member to be measured is fixed to the outside of the current collection part, according to an embodiment of the present disclosure.
FIG. 7 is a perspective view showing a magnetic force supply part according to an embodiment of the present disclosure.
FIG. 8 is a cross-sectional view of the magnetic force supply part according to an embodiment of the present disclosure.
FIG. 9 is a perspective view showing a state in which a fixing clamp fixes a current collection part, according to an embodiment of the present disclosure.

### DETAILED DESCRIPTION

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

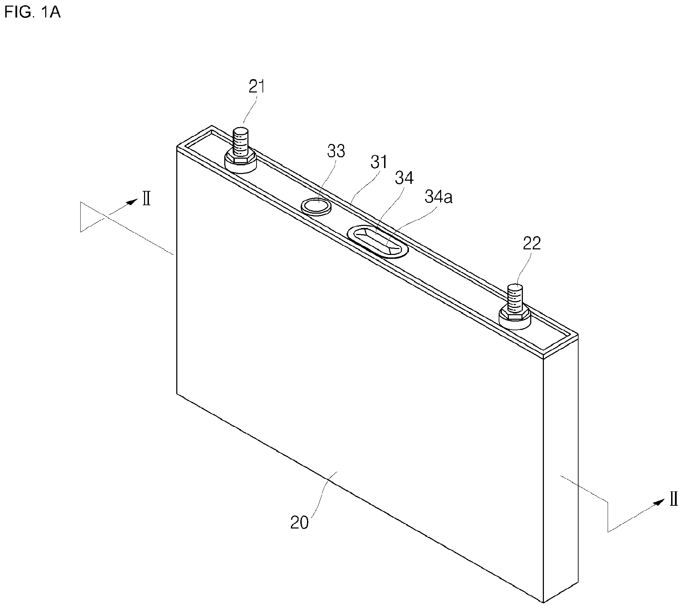

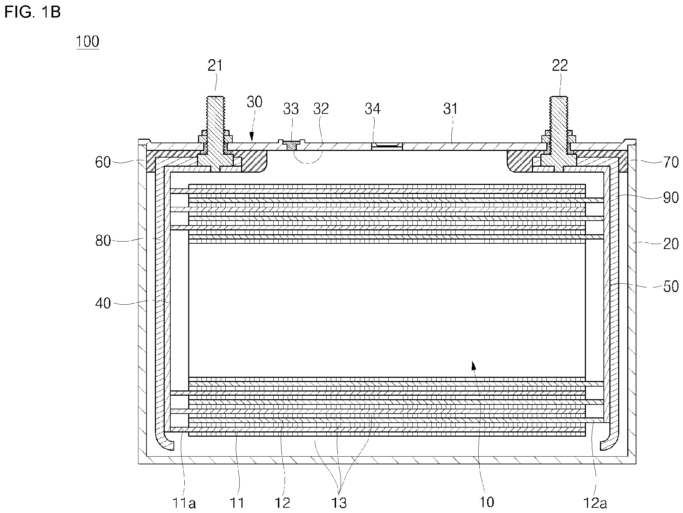

FIG. 1A is a perspective view of a secondary battery according to a first embodiment of the present disclosure, and FIG. 1B is a cross-sectional view taken along line II-II in FIG. 1A.

Referring to FIGS. 1A and 1B, a secondary battery 100 according to the present embodiment may include at least one electrode assembly 10 in which a separator 13 as an insulator is between a positive electrode 11 and a negative electrode 12 and wound together, a case 20 having the electrode assembly 10 accommodated therein, and a cap assembly 30 coupled to an opening of the case 20.

The secondary battery 100 according to the present embodiment is described as an example of a lithium ion secondary battery having a square shape, but the present disclosure is not limited thereto and can be applied to various types of batteries, such as lithium polymer batteries or cylindrical batteries.

The positive electrode 11 and the negative electrode 12 may include coated portions, which are areas in which an active material is applied to a current collection part formed of a thin metal foil, and uncoated portions 11a and 12a, which are areas to which the active material is not coated, respectively.

The positive electrode 11 and the negative electrode 12 are wound with a separator 13 as an insulator therebetween. However, the present disclosure is not limited thereto, and the electrode assembly 10 may have a structure in which a positive electrode and a negative electrode made of a plurality of sheets are alternately stacked with a separator therebetween.

The case 20 forms the overall external appearance of the secondary battery 100 and may be made of a conductive metal such as aluminum, an aluminum alloy, or nickel-plated steel. In addition, the case 20 may provide a space in which the electrode assembly 10 is accommodated.

The cap assembly 30 may include a cap plate 31 that covers the opening of the case 20, and the case 20 and the cap plate 31 may be made of a conductive material. The positive and negative electrode terminals 21 and 22, which are electrically connected to the positive electrode 11 and the negative electrode 12, respectively, may protrude outward through the cap plate 31.

In addition, the outer peripheral surfaces of upper pillars of the positive and negative electrode terminals 21 and 22 protruding outward from the cap plate 31 may be threaded and fixed to the cap plate 31 with nuts.

However, the present disclosure is not limited to this, and the positive and negative electrode terminals 21 and 22 may be riveted in a riveted structure or may be welded to the cap plate 31.

In addition, the cap plate 31 may be made of a thin plate and can be coupled to the opening of the case 20, an electrolyte injection port 32 may be in the cap plate 31 where a seal plug 33 can be installed, and a vent part 34 having a notch 34a therein may be installed. In some embodiments, the vent part 34 may block a vent hole in the cap plate 31. In some embodiments, the vent part 34 may be bonded or welded to the surrounding area of the vent hole (an area of the cap plate).

The positive and negative electrode terminals 21 and 22 may be electrically connected to a current collection part including first and second current collectors 40 and 50, respectively, (hereinafter referred to as positive and negative electrode current collectors) by welding to a positive electrode uncoated portion 11a and a negative electrode uncoated portion 12a, respectively.

In one or more embodiments, the positive and negative electrode terminals 21 and 22 may be joined to the positive and negative electrode current collectors 40 and 50, respectively, by welding. However, the present disclosure is not limited to this, and the positive and negative electrode terminals 21 and 22 and the positive and negative electrode current collectors 40 and 50, respectively, may be integral (monolithic), thus simplifying the assembly process.

In addition, an insulation member may be between the electrode assembly 10 and the cap plate 31. In one or more embodiments, the insulation member may include first and second lower insulation members 60 and 70, and each of the first and second lower insulation members 60 and 70 may be between the electrode assembly 10 and the cap plate 31.

In addition, according to the present embodiment, one end of a separation member facing one side of the electrode assembly 10 may be between the insulation member and the positive and negative electrode terminals 21 and 22.

In one or more embodiments, the separation member may include first and second separation members 80 and 90.

Accordingly, first ends of the first and second separation members 80 and 90 opposite to one side of the electrode assembly 10 may be between the first and second lower insulation members 60 and 70, respectively, and the positive and negative electrode terminals 21 and 22, respectively.

The positive and negative electrode terminals 21 and 22 welded to the positive and negative electrode current collectors 40 and 50, respectively, may be coupled to the first and second lower insulation members 60 and 70, respectively, and the first ends of the first and second separation members 80 and 90, respectively.

Welding may be performed on the side of the first current collector 40 or the second current collector 50 of the secondary battery 100, and a visual inspection may be performed to inspect whether foreign matter generated during welding is attached to the outside of the first current collector 40 or the second current collector 50, thus enabling an effective quality assurance.

In order to confirm whether the secondary battery foreign matter inspection device is properly inspecting foreign matter, it is important to photograph the foreign matter and compare whether an actual size of the foreign matter and the size of the foreign matter on the image are the same (or substantially the same). The method of photographing foreign matter in a secondary battery foreign matter inspection device can be divided into a method of photographing by reproducing actual foreign matter and a method of producing a shape similar to foreign matter.

The size of foreign matter (spatter) generated during welding is about (approximately) 10 to about (approximately) 1000 µm, and in order to reproduce this, high-intensity laser output and coordination of extreme conditions (suction-off, N2-off) must be implemented, which may cause damage to the equipment.

In addition, the foreign matter having a size of 500 µm or more, which is a standard for pass/fail determination, may be difficult to reproduce, and due to the small size and corrosion of foreign matter, it is also difficult to manage small-sized foreign matter for visual inspection.

The method of producing a shape similar to foreign matter can be divided into an attached type and a fixed type. When installing the foreign matter in an attached type, the foreign matter must be installed outside a current collection part 370 that vertically stands so that the foreign matter may fall downward.

In addition, when an adhesive such as glue/tape, etc. is used to fix the foreign matter to the outside of the current collection part 370, a glue mark or vinyl on the tape may be recognized as the same as the foreign matter, which may lead to difficulties in measuring the foreign matter.

In addition, when foreign matter is formed integrally with the current collection part 370, a problem may arise in implementing the color and shape of foreign matter. In one or more embodiments, the size of foreign matter is about (approximately) 500 µm, and the manufacturing tolerance is about (approximately) 20 µm, and thus it is difficult to produce foreign matter of this size integrally with the current collection part 370.

The foreign matter inspection device uses a method of synthesizing images by recognizing the light reflected by illuminating multiple illuminations toward foreign matter (spatter) present outside the current collection part 370. Therefore, the foreign matter inspection device is greatly affected by the wavelength of reflected light. Therefore, the current collection part 370 and the foreign matter accepted by the inspection device should be made of the same material and color to increase measurement accuracy.

A master jig device 200 may be utilized to inspect whether the secondary battery foreign matter inspection device properly operates, and the master jig device 200 according to the present disclosure fixes the current collection part 370 and spherical foreign matter by using magnetic force, thereby quickly and easily checking whether the foreign matter inspection device is operating normally.

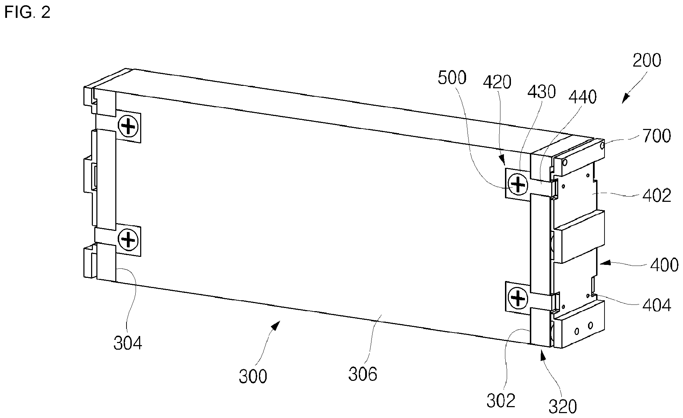

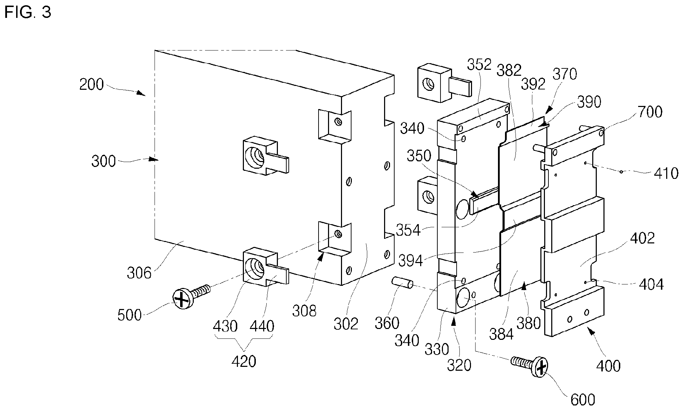

FIG. 2 is a perspective view showing the master jig device 200 for a secondary battery foreign matter inspection device according to an embodiment of the present disclosure, and FIG. 3 is an exploded perspective view of the master jig device 200 for a secondary battery foreign matter inspection device according to an embodiment of the present disclosure. As shown in FIGS. 2 and 3, during use of the master jig device 200, a to be-inspected member 410, which includes foreign matter, is fixed to the outside of the current collection part 370 by magnetic force. The to be-inspected member 410 includes foreign matter (spatter) generated during welding. The master jig device 200 according to an embodiment of the present disclosure includes a jig body 300, a magnetic force supply part 320, the current collection part 370, and the to be-inspected member 410. In addition, the master jig device 200 may further include at least one of a guide part 400 or a fixing clamp 420.

If foreign matter flows into a secondary battery cell, voltage failure, smoke, or ignition may be caused. Therefore, if the diameter of foreign matter is determined to be more than about (approximately) 500 µm through visual inspection after welding, the foreign matter is determined to be defective. By using the master jig device 200 according to the present disclosure, it is possible to periodically test whether the foreign matter inspection device is operating normally.

The to be-inspected member 410 that includes foreign matter is provided in the master jig device 200. Matters that may be considered for the to be-inspected member 410 to include or replicate foreign matter include the shape, color, location of the to be-inspected member 410 within a jig, easy storage, production cost, etc. The to be-inspected member 410 may be attached to the outside of the current collection part 370 by magnetic force.

The to be-inspected member 410, which includes foreign matter, is attached to the outside of the current collection part 370 at a set position, and has the same color and material as the foreign matter, and thus the inspection accuracy can be improved.

In order to measure whether the foreign matter inspection device for measuring defects through visual inspection after welding is performed on a side of a secondary battery operates normally, the master jig device 200 according to the present disclosure may be used.

The jig body 300 may have a shape corresponding to a secondary battery. The jig body 300 may be shaped or sized to correspond to the electrode assembly of the secondary battery. The jig body 300 is shaped of a rectangular parallelepiped and may extend in the longitudinal direction (left and right directions in FIG. 2). A first side 302 is located at one end in the longitudinal direction (right side in FIG. 2), and a second side 304 is located at the other end in the longitudinal direction (left side in FIG. 2). The magnetic force supply part 320 may be fixed to at least one of the first side 302 or the second side 304. The magnetic force supply part 320 according to an embodiment of the present disclosure is on the first side 302 and the second side 304, respectively. The front and rear sides of the jig body 300 have a long side surface 306 having a larger area than the other sides. The fixing clamp 420, which will be described later, may be fixed to the long side surface 306. In one or more embodiments, a side mounting groove 308 is on one side and the other side of the long side surface 306 in the longitudinal direction, and the fixing clamp 420 may be inserted into the side mounting groove 308.

The magnetic force supply part 320 is on at least one side of the jig body 300 in the longitudinal direction, and may have any suitable configuration configured to generate magnetic force. The magnetic force supply part 320 is between the jig body 300 and the current collection part 370 and is configured to supply magnetic force to fix the to be-inspected member 410 to the outside of the current collection part 370. The magnetic force supply part 320 may be made of a single magnet, and various modifications are possible, including a magnet being inside a housing that is separately provided.

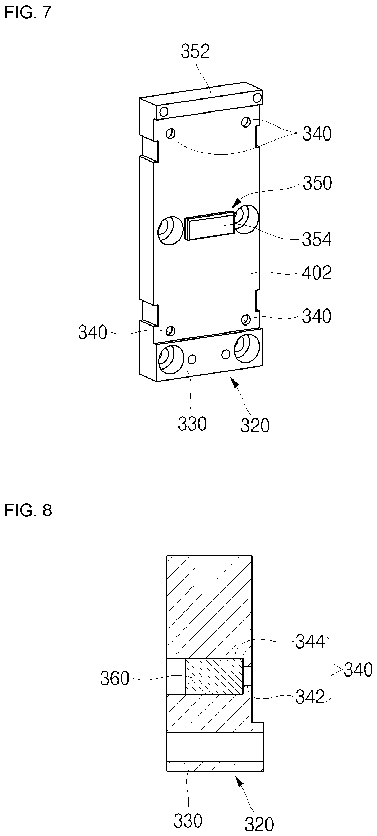

FIG. 7 is a perspective view showing a magnetic force supply part 320 according to an embodiment of the present disclosure, and FIG. 8 is a cross-sectional view of the magnetic force supply part 320 according to an embodiment of the present disclosure. As shown in FIGS. 7 and 8, the magnetic force supply part 320 according to an embodiment of the present disclosure may include a fixed body 330 and a fixed magnet 360.

The fixed body 330 is between the jig body 300 and the current collection part 370, and may have any suitable configuration in which it is fixed to the outside of the jig body 300. The fixed body 330 may have a plate shape extending in the vertical direction, and the fixed magnet 360 may be inside the fixed body 330. The fixed body 330 according to an embodiment of the present disclosure may include a mounting hole part 340 for mounting the fixed magnet 360 and a support protrusion 350 for supporting the current collection part 370.

The mounting hole part 340 forms a passage in which the fixed magnet 360 is mounted, and the mounting hole part 340 may have any suitable configuration in which a hole faces the current collection part 370. In one or more embodiments, magnetic force supply part 320 may include two or more mounting hole parts 340, two or more fixed magnets 360, and two or more to be-inspected members 410. In addition, the numbers of mounting hole parts 340, fixed magnets 360, and to be-inspected member 410 may be equal. In one or more embodiments in which the to be-inspected members 410 are fixed at four locations, four mounting hole parts 340 and four fixed magnets 360 may also be provided. However, depending on use environments, various modifications are possible, including changing the numbers of mounting hole parts 340, fixed magnets 360, and to be-inspected members 10.

The mounting hole part 340 according to an embodiment of the present disclosure includes a first mounting hole 342 and a second mounting hole 344. The first mounting hole 342 extends in the direction toward the current collection part 370, and thus guides the magnetic force of the fixed magnet 360 to move in the direction toward the current collection part 370. The second mounting hole 344 is connected to the first mounting hole 342, and has an inner diameter equal to or larger than the diameter of the fixed magnet 360.

The centers of the first mounting hole 342 and the second mounting hole 344 are located on the same straight line (i.e., coaxial or substantially coaxial), thereby together forming a hole that penetrates the fixed body 330 in the longitudinal direction. The inner diameter of the second mounting hole 344 may be larger than the inner diameter of the first mounting hole 342. In addition, the inner diameter of the first mounting hole 342 may be smaller than the outer diameter of the fixed magnet 360. Therefore, the fixed magnet 360 can be mounted inside the second mounting hole 344, but cannot move in the direction toward the current collection part 370 through the first mounting hole 342.

The support protrusion 350 protrudes from the fixed body 330 in the direction toward the current collection part 370, and the support protrusion 350 may have any suitable configuration of a protrusion that catches the current collection part 370. The current collection part 370 in the secondary battery may have a curved shape, and the support protrusion 350, which forms a protrusion corresponding to the curved shape of the current collection part 370, is provided on the fixed body 330, and thus the current collection part 370 can be supported more stably. In an embodiment in which the current collection part 370 can be stably fixed to the outside of the magnetic force supply part 320, the support protrusion 350 may be omitted.

The support protrusion 350 according to an embodiment of the present disclosure includes a first support protrusion 352 and a second support protrusion 354. The first support protrusion 352 is on the upper side of the fixed body 330 and protrudes in a direction toward the current collection part 370. The first support protrusion 350 is a band-shaped protrusion (e.g., a rib or a lip) extending in the width direction of the fixed body 330 that is configured to support the protrusion part 390 of the current collection part 370.

The second support protrusion 354 is below the first support protrusion 352 at an intermediate position of the fixed body 330 and is configured to be inserted into the inside of the protrusion part 390 located in the center of the current collection part 370, and thus can support the current collection part 370 more stably. The second support protrusion 354 has a protrusion shape that protrudes toward the current collection part 370 and may be a strip-shaped protrusion (e.g., a rectangular protrusion) extending in the width direction of the fixed body 330.

The fixed magnet 360 is mounted inside the fixed body 330 and may have any suitable configuration configured to generate a magnetic force. The fixed magnet 360 according to an embodiment of the present disclosure has a cylindrical shape and may be configured to generate a magnetic force.

The current collection part 370 is outside the magnetic force supply part 320 and may be shaped to correspond to the positive and negative current collectors of the secondary battery. The current collection part 370 may have a curved plate shape. The current collection part 370 according to an embodiment of the present disclosure may include a plane part 380 (i.e., a flat or planar part) and a protrusion part 390.

The plane part 380 may be in contact with the fixed body 330 of the magnetic force supply part 320. The plane part 380 may have a plate shape extending in the vertical direction. The to be-inspected member 410 may be attached to the outside of the plane part 380. The plane part 380 may face the mounting hole part 340 in the fixed body 330. The plane part 380 according to an embodiment of the present disclosure may include a first plane 382 (i.e., a first planar portion) and a second plane 384 (i.e., a second planar portion).

The first plane 382 has a plate shape and may be in contact with the outside of the fixed body 330 between the first support protrusion 352 and the second support protrusion 354 or spaced apart at a set interval. The second plane 384 has a plate shape and may be in contact with the outside of the fixed body 330 located below the second support protrusion 354 or spaced apart at a set interval. The second plane 384 is located below the first plane 382.

The protrusion part 390 extends from plane part 380 in a bent shape. The protrusion part 390 may be bent in a direction away from the magnetic force supply part 320. The protrusion part 390 according to one embodiment of the present disclosure includes a first protrusion 392 and a second protrusion 394.

The first protrusion 392 extends upward from the first plane 382 and has a curved shape, and may be in contact with the outside of the first support protrusion 352.

The second protrusion 394 is located between the first plane 382 and the second plane 384 and forms a groove facing toward the magnetic force supply part 320. Therefore, the second support protrusion 354 can be inserted into the groove formed by the second protrusion 394.

The guide part 400 is outside the current collection part 370, and may have any suitable configuration including a hole in the direction toward the current collection part 370. The guide part 400 according to an embodiment of the present disclosure may include a guide body 402 and guide holes 404 in the guide body 402.

The guide body 402 faces the outer surface of the current collection part 370, and may have any suitable configuration in which it is fixed to the magnetic force supply part 320. The guide body 402 surrounds the outside of the current collection part 370, and is fixed to the outside of the current collection part 370 by the third fixing member 700. The guide body 402 extends in the vertical direction and can form a groove along the curved shape of the current collection part 370.

In one or more embodiments, the guide holes 404 penetrating the guide body 402 form holes at positions facing the mounting hole part 340 provided in the magnetic force supply part 320 such that movement of the to be-inspected member 410 occurs. The guide holes 404 are holes that penetrate the guide body 402 in the longitudinal direction, and can be installed at each set location.

The to be-inspected member 410 may have any suitable configuration in which it includes or replicates foreign matter. The to be-inspected member 410 may be fixed to the outside of the current collection part 370 by the magnetic force of the magnetic force supply part 320. The to be-inspected member 410 is measured as foreign matter by a foreign matter inspection device. The to be-inspected member 410 may be moved to the outside of the current collection part 370 through the guide part 400 and then fixed to the outside of the current collection part 370 by the magnetic force of the magnetic force supply part 320. The size of the to be-inspected member 410 is about (approximately) 500 µm, and the manufacturing tolerance may be about (approximately) 20 µm. The to be-inspected member 410 may be spherical or have a curved surface close to a spherical shape. The material and color of the to be-inspected member 410 may be the same as the current collection part 370.

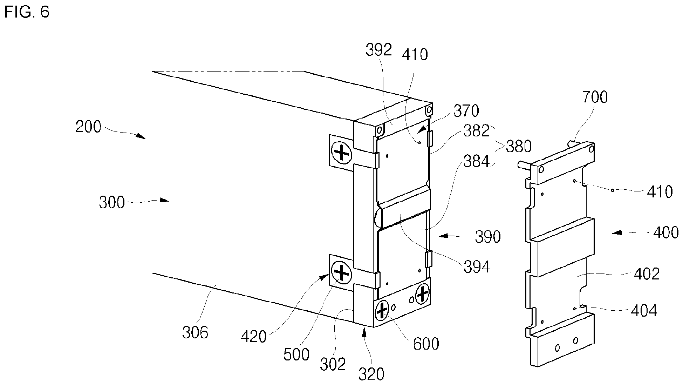

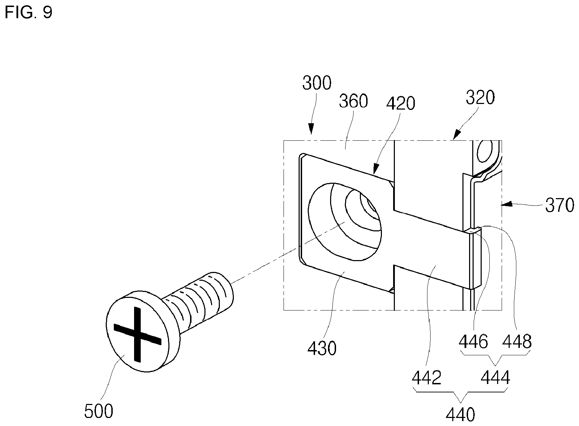

FIG. 9 is a perspective view showing a configuration in which a fixing clamp 420 fixes a current collection part 370 according to an embodiment of the present disclosure. As shown in Figures 6 and 9, the fixing clamp 420 is fixed to the jig body 300 and constrains the movement of the current collection part 370 by pressing the current collection part 370 in a direction toward the magnetic force supply part 320. The fixing clamp 420 includes a plurality of fixing clamps, which are installed on both sides of the current collection part 370 in the width direction, thereby constraining the movement of the current collection part 370.

The fixing clamp 420 according to an embodiment of the present disclosure may include a fixing body 430 and a fixing hook 440. The fixed body 430 may have any suitable configuration configured to be fixed to the jig body 300. The fixed body 430 is fixed in a state of being inserted into the side mounting groove 308 provided in the jig body 300. In one or more embodiments, the first fixing member 500 is a bolt that penetrates the fixed body 430 and is fixed to the jig body 300, thereby fixing the fixing clamp 420 to the jig body 300.

The fixing hook 440 extends from the fixed body 430 and is elastically caught on the outside of the current collection part 370, thereby constraining the movement of the current collection part 370. The fixing hook 440 may have the shape of a bent metal piece. The fixing hook 440 according to an embodiment of the present disclosure may include an extension member 442 and a locking hook 444. The extension member 442 extends from the fixed body 430. The length of the extension member 442 may be equal to or greater than the thickness of the magnetic force supply part 320.

The locking hook 444 is bent at the extension member 442 and is caught (engaged) on the outside of the current collection part 370. The locking hook 444 according to an embodiment of the present disclosure includes a hook body 446 that is bent in a direction from the extension member 442 toward the current collection part 370, and an extension hook 448 that extends from the hook body 446 and is caught (engaged) on the outer surface of the current collection part 370.

Since the end of the hook body 446 is in contact with a side surface of the current collection part 370, the movement of the current collection part 370 in the width direction may be constrained. In addition, since the extension hook 448 is caught (engaged) on the outer surface of the current collection part 370, the current collection part 370 may be fixed in contact with the magnetic force supply part 320.

The magnetic force supply part 320 may be fixed by the second fixing member 600 to both ends of the jig body 300. The second fixing member 600 may include various types of fastening members, such as bolts, pins, etc.

The guide part 400 may also be fixed to the outside of the current collection part 370 by the third fixing member 700. The third fixing member 700 may include various types of fastening members, such as bolts, pins, etc. The third fixing member 700 may penetrate the guide part 400 and be fixed to the fixed body 330 of the magnetic force supply part 320.

Hereinafter, assembly and operation of the master jig device 200 will be described with reference to the drawings. As shown in FIGS. 7 and 8, the fixed magnet 360 is inserted into the mounting hole part 340 in the magnetic force supply part 320. Then, after fixing the magnetic force supply part 320 to the jig body 300, the current collection part 370 is fixed to the outside of the magnetic force supply part 320 using the fixing clamp 420.

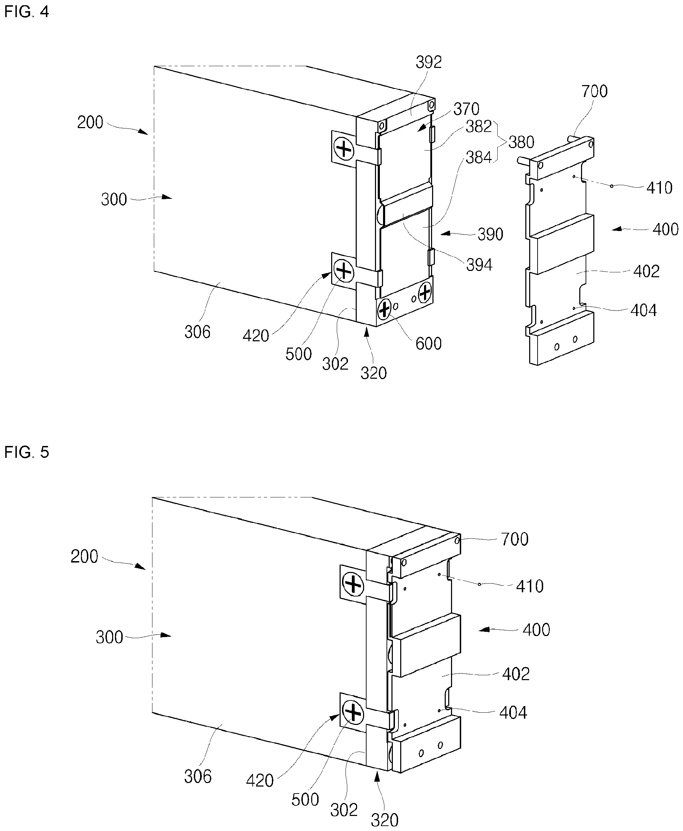

FIG. 4 is a perspective view showing a state in which the current collection part 370 and the guide part 400 are spaced apart from each other, according to an embodiment of the present disclosure. As shown in FIG. 4, the guide part 400 and the to be-inspected member 410 are placed outside the current collection part 370.

FIG. 5 is a perspective view showing the guide part 400 fixed to the outside of the current collection part 370, according to an embodiment of the present disclosure. As shown in FIG. 5, the to be-inspected member 410 is moved through the guide hole 404 provided in the guide part 400. The to-be-inspected member 410, which moves to the current collection part 370 along the guide hole 404, is fixed to the outside of the current collection part 370 by the magnetic force of the magnetic force supply part 320. In one or more embodiments, the guide hole 404, the mounting hole part 340, and the fixed magnet 360 may be located on the same straight line (i.e., colinear or substantially colinear). Because the mounting hole part 340 and the guide hole 404 are on opposite sides of the current collection part 370 (i.e., the current collection part 370 is between the mounting hole part 340 and the guide hole 404), the movement of the to-be-inspected member 410, which is fixed by the magnetic force, can be prevented. The guide part 400 functions to guide the to-be-inspected member 410 so as to be accurately attached to a set position.

FIG. 6 is a perspective view showing a state in which the guide part 400 is separated from the current collection part 370 and the to be-inspected member 410 is fixed to the outside of the current collection part 370, according to an embodiment of the present disclosure. As shown in FIG. 6, in a state in which the to be-inspected member 410 is attached to the outside of the current collection part 370, the guide part 400 moves in a direction away from the current collection part 370. In addition, the to-be-inspected member 410 is measured by operating the foreign matter inspection device in a state in which the to be-inspected member 410 is fixed to the outside of the current collection part 370, thereby inspecting whether the foreign matter inspection device is operating normally.

The number of to be-inspected members 410 installed can change depending on inspection environments, and can include two or more to be-inspected members 410 (e.g., more than 50 to be-inspected members 410). When installed in a positive electrode, the to be-inspected member 410 may be made of aluminum, and when installed in a negative electrode, the to be-inspected member 410 may be made of copper.

As described above, in the case of using a master jig that uses magnetic force to fix the to-be-inspected member 410 to the outside of the current collection part 370, production costs can be reduced compared to other methods. In addition, instead of making a separate master jig for each model, one master jig can be produced and then commonly used for multiple models, thereby reducing production and storage costs.

While the foregoing embodiment is only one embodiment for carrying out the present disclosure, which is not limited to the embodiment, it will be understood by a person skilled in the art that various modifications and changes in form and details may be made therein within the equivalent scope of the technical idea of the present disclosure as defined by the following claims.

## Claims

1. A master jig device (200) comprising:
a jig body (300) having a shape corresponding to a secondary battery (100);
a magnetic force supply part (320) on at least one of one side or another side of the jig body (300) in a longitudinal direction of the jig body (300), the magnetic force supply part (320) being configured to generate a magnetic force;
a current collection part (370) outside the magnetic force supply part (320); and
a to-be-inspected member (410) fixed to an outside of the current collection part (370) by the magnetic force of the magnetic force supply part (320), the to-be-inspected member (410) being configured to be measured as foreign matter by a foreign matter inspection device.

2. The master jig device (200) as claimed in claim 1, wherein the jig body (300) has a rectangular parallelepiped shape, a first side (302) at one end in the longitudinal direction, and a second side (304) at another end in the longitudinal direction, and wherein the magnetic force supply part (320) is fixed to at least one of the first side (302) or the second side (304).

3. The master jig device (200) as claimed in claim 1 or 2, wherein the magnetic force supply part (320) comprises:
a fixed body (330) between the jig body (300) and the current collection part (370) and fixed to an outside of the jig body (300); and
a fixed magnet (360) inside the fixed body (330), the fixed magnet (360) being configured to generate the magnetic force.

4. The master jig device (200) as claimed in claim 3, wherein the fixed body (330) comprises a mounting hole part (340), the mounting hole part (340) comprising a passage in which the fixed magnet (360) is mounted and a hole facing the current collection part (370).

5. The master jig device (200) as claimed in claim 4, wherein the mounting hole part (340) comprises:
a first mounting hole (342) extending in a direction toward the current collection part (370); and
a second mounting hole (344) connected to the first mounting hole (342) and having an inner diameter equal to or larger than an outer diameter of the fixed magnet (360).

6. The master jig device (200) as claimed in claim 5, wherein the inner diameter of the second mounting hole (344) is larger than an inner diameter of the first mounting hole (342).

7. The master jig device (200) as claimed in claims 4 to 6, wherein the mounting hole part (340) comprises a plurality of mounting hole parts (340), the fixed magnet (360) comprises a plurality of fixed magnets (360), and the to-be-inspected member (410) comprises a plurality of to-be-inspected members (410).

8. The master jig device (200) as claimed in claims 3 to 7, wherein the fixed body (330) further comprises a support protrusion that protrudes in a direction toward the current collection part (370), the support protrusion engaging the current collection part (370).

9. A master jig device (200) comprising:
a jig body (300) having a shape corresponding to a secondary battery (100);
a magnetic force supply part (320) on at least one of one side or another side of the jig body (300) in a longitudinal direction of the jig body (300), the magnetic force supply part (320) being configured to generate a magnetic force;
a current collection part (370) outside the magnetic power supply part;
a guide part (400) outside the current collection part (370) and comprising a hole extending in a direction toward the current collection part (370); and
a to-be-inspected member (410), the to-be-inspected member (410) being configured to move to an outside of the current collection part (370) through the guide part (400) and to be fixed to an outside of the current collection part (370) by the magnetic force of the magnetic force supply part (320).

10. The master jig device (200) as claimed in claim 9, wherein the guide part (400) comprises:
a guide body (402) facing an outer surface of the current collection part (370) and fixed to the magnetic force supply part (320); and
a guide hole (404) at a position facing a mounting hole part (340) in the magnetic force supply part (320), the to-be-inspected member (410) being configured to move through the guide hole (404).

11. The master jig device (200) as claimed in claim 9 or 10, further comprising a fixing clamp (420) fixed to the jig body (300) and constraining movement of the current collection part (370) by pressing the current collection part (370) in a direction toward the magnetic force supply part (320).

12. The master jig device (200) as claimed in claim 11, wherein the fixing clamp (420) comprises:
a fixed body (330) fixed to the jig body (300); and
a fixing hook (440) that extends from the fixed body (330) and engages the outside of the current collection part (370).

13. The master jig device (200) as claimed in claim 11, wherein the fixing clamp (420) comprises a plurality of fixing clamps (420) on both sides of the current collection part (370) in a width direction of the current collection part (370).

14. The master jig device (200) as claimed in claims 9 to 13, wherein the magnetic force supply part (320) comprises: a fixed body (330) located between the jig body (300) and the current collection part (370) and fixed to the outside of the jig body (300); and a fixed magnet (360) mounted inside the fixed body (330) to generate magnetic force.

15. The master jig device (200) as claimed in claim 14, wherein the fixed body (330) comprises: a first mounting hole (342) forming a hole in a direction toward the current collection part (370); and a second mounting hole (344) connected to the first mounting hole (342) and having an inner diameter equal to or larger than the outer diameter of the fixed magnet (360).
